# EUROPEAN PATENT APPLICATION

(11) **EP 3 514 588 A1**
(43) Date of publication of application: **24.07.2019**
(21) Application number: 18152383.8
(22) Date of filing: 18.01.2018
(51) Int. Cl.: G02B 6/30

(54) **OPTICAL CHIP WITH AN EDGE COUPLER**

(71) Applicant: HUAWEI TECHNOLOGIES CO., LTD., Guangdong 518129 (CN)
(72) Inventor: LAMPONI, Marco, 80992 Munich (DE); BROUCKAERT, Joost, 80992 Munich (DE)
(74) Representative: Roth, Sebastian

(57) **Abstract**

The present invention provides an optical chip 100 including an edge coupler 110 for coupling light between the chip 100 and another optical device. The edge coupler 110 comprises a first cladding 111, a second cladding 112 provided on the first cladding 111, and a waveguide embedded in the first cladding 111. The second cladding 112 has a higher refractive index than the first cladding 111. The first cladding 111 and the second cladding 112 are surrounded by a substance 114 having a lower refractive index than the first and second claddings 111, 112. The waveguide 113 is tapered towards an optical facet 115 of the edge coupler 110.

## Description

### TECHNICAL FIELD

The present invention relates to an optical chip including an edge coupler, and to a method for fabricating the optical chip, particularly fabricating the edge coupler. The optical chip may thereby be the edge coupler. The purpose of the edge coupler is to couple light into another optical device, like another optical chip or an optical fiber, and vice versa.

### BACKGROUND

Silicon photonics is rapidly gaining importance as a generic technology platform for a wide range of applications in telecom, datacom, interconnect and sensing. It allows, for instance, implementing photonic functions through the use of CMOS compatible wafer-scale technologies on high quality and low cost substrates. Especially for short distance applications like datacom, interconnect or access networks, the device price is a major concern. Thanks to silicon mass production, the price of an optical chip integrating hundreds of basic building blocks can be extremely aggressive. However, as the packaging cost can largely exceed the cost of the single optical chip, the device price can in the end still be too high to meet the market needs.

In particular, the need for an efficient output coupling of light from an optical chip to an optical fiber (or other optical device) is one of the main reasons for high packaging costs. Connecting, for instance, an optical fiber to a millimetre-scale optical chip often involves complex alignment procedures with tight mechanical tolerances.

Silicon or silicon nitride waveguides have a typical optical Mode Field Diameter (MFD) of around 1 µm. In order to enable data transmission, an optical chip having such waveguides needs to be interfaced with an optical fiber that has a much larger MFD (in the order of 10µm). Due to this mismatch in mode size, a coupling structure is needed that minimizes coupling losses. The coupling structure particularly has to enlarge the smaller waveguide optical mode to adapt it to the wider fiber optical mode.

Considering only horizontal coupling approaches, which offers a wider bandwidth and a lower polarization dependent loss, conventional solutions use some kind of mode conversion through adiabatic tapering. Further, in order to avoid loss to the substrate over the tapering region, typically an isotropic etching step is performed, in order to selectively remove the material underneath the tapered waveguide. As an alternative, a very thick dedicated top cladding is sometimes used in the region of the edge coupler. While this allows the optical mode to move away from the substrate, it involves complex fabrication.

In summary, conventional solutions are still too expensive and/or too complex in fabrication.

### SUMMARY

In view of the above-mentioned disadvantages, the present invention aims to improve the conventional solutions. In particular, the object of the invention is to provide an optical chip enabling a cost-effective solution to the coupling problem. Accordingly, the invention intends to provide an optical chip with a simple and inexpensive edge coupler, which allows coupling light between the optical chip and another optical device with low loss. Thereby, no complex suspended structure (e.g. a "cantilever") should be used. The invention accordingly aims at paving the way for a large number of photonic products including such optical chips. A cheap wafer-level fabrication method should thus be possible. In particular, high-volume low-cost single-mode fiber attachment to an optical chip is highly desired.

The object of the present invention is achieved by the solution provided in the enclosed independent claims. Advantageous implementations of the present invention are further defined in the dependent claims.

The main idea of the invention is using a cheap fabrication process for the deposition of two slightly different materials for a bottom and a top cladding of a waveguide. The waveguide is surrounded by the two different materials, wherein particularly the bottom cladding has a lower refractive index than the top cladding.

A first aspect of the present invention provides an optical chip including an edge coupler for coupling light between the chip and another optical device, the edge coupler comprising a first cladding, a second cladding provided on the first cladding and having a higher refractive index than the first cladding, wherein the first cladding and the second cladding are surrounded by a substance having a lower refractive index than the first and second claddings, and a waveguide embedded in the first cladding, the waveguide being tapered towards an optical facet of the edge coupler.

Due to the tapering of the waveguide and the different refractive indices of the first (bottom) cladding and the second (top) cladding, the second cladding can function as a waveguide of the edge coupler. In particular, due to the tapering of the waveguide, the optical waveguide mode is widened so that light is transferred into the second cladding near the optical facet. In the second cladding the light is then guided to or from the optical facet. The transfer of light between the waveguide, the second cladding and finally the optical facet works of course in the same manner in the opposite direction. That is, the optical facet can function as an output and/or an input optical facet. Due to the enlarged optical mode in the top cladding near and at the optical facet, a coupling efficiency to another optical device like a fiber is significantly improved.

The optical chip can be produced in a cheap wafer-level fabrication method. In particular, during the fabrication of the optical chip, only the materials of the two different claddings have to be selected, namely such that their refractive indices are at least slightly different. However, no complex structures such as cantilevers need to be formed. Further, since the second cladding is used typically all over the optical chip and even over the whole wafer on which the chip is fabricated, no additional fabrication step is required for the output waveguide design of the invention. The optical chip is thus in the end less expensive and of lower complexity than conventional solutions.

In an implementation form of the first aspect, the substance surrounding the first and second claddings is air.

Air thereby has a lower refractive index than the second cladding. Thus, the top cladding having a higher refractive index is sandwiched between the bottom cladding and air having lower refractive indices, respectively. This implementation form is particularly simple and cheap in fabrication.

In a further implementation form of the first aspect, the substance surrounding the first and second claddings is an epoxy or a glue.

The epoxy or glue has thereby a lower refractive index than the second cladding. Accordingly, the top cladding can act as a waveguide that has an epoxy/glue cladding on the upper side, and the first cladding as bottom cladding on the lower side. The epoxy or glue provides additional protection of the optical chip, specifically of the edge coupler and its optical facet. Further, it can be used for attaching, for instance, an optical fiber to the optical facet of the edge coupler. The epoxy or glue may be dispensed and cured at least on top of and around the second cladding, for instance, during a fiber attachment.

In a further implementation form of the first aspect, the optical chip further comprises an optical fiber or fiber array unit optically coupled to and attached to the edge coupler by the epoxy or glue.

An efficient coupling between the optical chip and the fiber via the edge coupler is thus achieved. The optical chip is further simple to fabricate and device cost is low.

In a further implementation form of the first aspect, the refractive index of the substance surrounding the first and second claddings is between 96.5-99.0% of the refractive index of the second cladding.

Such a slight difference of the refractive index is sufficient for achieving the beneficial effects of the invention, and can be easily provided with for instance silicon oxides and epoxy or glue. The above ratio range of the refractive indices provides a particular efficient solution.

In a further implementation form of the first aspect, the refractive index of the first cladding is between 98.0-99.7% of the refractive index of the second cladding.

Such a slight difference of the refractive index is sufficient for achieving the beneficial effects of the invention, and can be easily provided with for instance different silicon oxides. The above ratio range of the refractive indices provides a particular efficient solution.

In a further implementation form of the first aspect, the optical chip further comprises a substrate, on which the edge coupler is provided, wherein the substrate has a larger width than the first and second claddings in a direction perpendicular to the waveguide and extends beyond the optical facet of the edge coupler.

Thus, the second cladding efficiently functions as a waveguide towards the optical facet of the edge coupler. The optical mode size in the second cladding can be adjusted to allow efficient coupling to/from e.g. an optical fiber.

In a further implementation form of the first aspect, the substance surrounding the first and second claddings also covers a substrate surface adjacent to the edge coupler.

Thus, the cladding stack is mechanically protected by the robust substance, and the second cladding can function as an output waveguide between the first cladding (cladding beneath the output waveguide) and the surrounding substance (cladding above the output waveguide).

In a further implementation form of the first aspect, the first and second claddings have each a width of between 5-20 µm.

The above values are advantageous for efficiently coupling light via the optical facet to a fiber or the like.

In a further implementation form of the first aspect, the waveguide is tapered from a width of 600-1000 nm to a width of 50-150 nm over a length of 300-1000 µm.

Such a tapering dimensions result in an adiabatic transfer of the light from the waveguide into the second cladding, and thus in reduced losses.

In a further implementation form of the first aspect, the waveguide is embedded in the first cladding 0.3-0.7 µm below the second cladding.

This distance to the second cladding is advantageous for efficiently coupling the light from the waveguide into the second cladding.

In a further implementation form of the first aspect, a thickness of the first cladding is between 2-6 µm, and/or a thickness of the second cladding is between 4-6 µm, and/or a thickness of the waveguide is between 150-300 nm.

The thickness of the first cladding prevents leakage to the substrate. The thickness of the waveguide and/or the second cladding provides efficient light transport in the edge coupler.

In a further implementation form of the first aspect, the first cladding and/or the second cladding is a silicon oxide.

In a further implementation form of the first aspect, the waveguide is made of silicon nitride.

The above-selected materials allow integration with silicon photonics devices and with silicon-based CMOS processing techniques.

A second aspect of the present invention provides a method of fabricating an optical chip including an edge coupler for coupling light between the chip and another optical device, the method comprising providing a first cladding layer, embedding a waveguide into the first cladding layer, the waveguide being tapered towards an optical facet of the edge coupler, providing a second cladding layer on the first cladding layer, the second cladding layer having a higher refractive index than the first cladding layer, forming a first cladding and a second cladding by removing parts of the first and second cladding layers, respectively, wherein parts adjacent to the waveguide are removed so that the waveguide remains embedded in the first cladding, surrounding the first cladding and the second cladding by a substance having a lower refractive index than the first and second claddings.

In an implementation form of the second aspect, the substance surrounding the first and second claddings is air.

In a further implementation form of the second aspect, the substance surrounding the first and second claddings is an epoxy or a glue.

In a further implementation form of the second aspect, the method further comprises optically coupling and attaching an optical fiber or fiber array unit to the edge coupler by the epoxy or glue.

In a further implementation form of the second aspect, the refractive index of the substance surrounding the first and second claddings is between 96.5-99.0% of the refractive index of the second cladding.

In a further implementation form of the second aspect, the refractive index of the first cladding is between 98.0-99.7% of the refractive index of the second cladding.

In a further implementation form of the second aspect, the method further comprises providing a substrate, on which the edge coupler is provided, wherein the substrate has a larger width than the first and second claddings in a direction perpendicular to the waveguide and extends beyond the optical facet of the edge coupler.

In a further implementation form of the second aspect, the substance surrounding the first and second claddings also covers a substrate surface adjacent to the edge coupler.

In a further implementation form of the second aspect, the first and second claddings have each a width of between 5-20 µm.

In a further implementation form of the second aspect, the waveguide is tapered from a width of 600-1000 nm to a width of 50-150 nm over a length of 300-1000 µm.

In a further implementation form of the second aspect, the waveguide is embedded in the first cladding 0.3-0.7 µm below the second cladding.

In a further implementation form of the second aspect, a thickness of the first cladding is between 2-6 µm, and/or a thickness of the second cladding is between 4-6 µm, and/or a thickness of the waveguide is between 150-300 nm.

In a further implementation form of the second aspect, the first cladding and/or the second cladding is a silicon oxide.

In a further implementation form of the second aspect, the waveguide is made of silicon nitride.

The method of the second aspect and its implementation forms achieve the same effects and advantages as the device of the first aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows an optical chip according to an embodiment of the invention in (a) a side view and (b) a top view.
- FIG. 2: shows an optical chip according to an embodiment of the invention.
- FIG. 3: shows an optical chip according to an embodiment of the invention.
- FIG. 4: shows a material stack included in an optical chip according to an embodiment of the invention.
- FIG. 5: shows an optical chip according to an embodiment of the invention.
- FIG. 6: shows a method according to an embodiment of the invention.

### DETAILED DESCRIPTION OF EMBODIMENTS

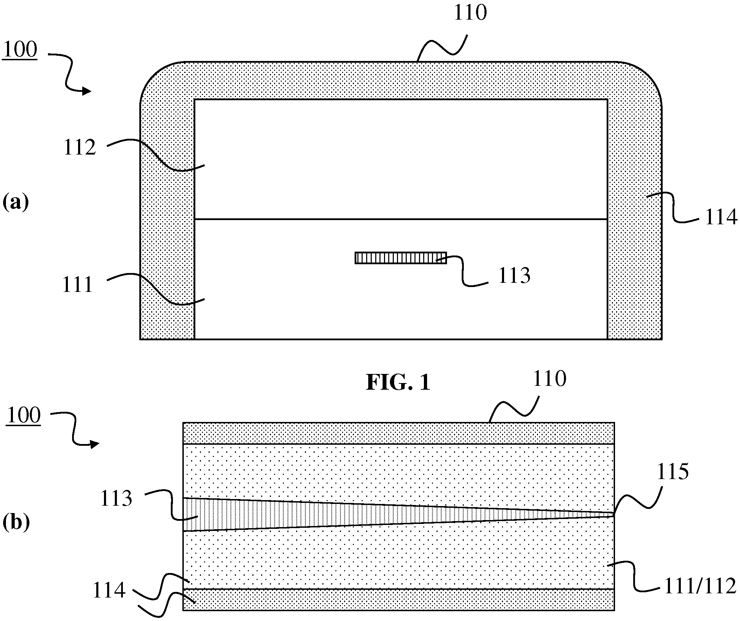

FIG. 1 shows an optical chip 100 according to an embodiment of the invention. The optical chip 100 includes an edge coupler 110. FIG. 1(a) shows particularly a side view of the optical chip 100, while FIG. 1(b) shows a top view of the optical chip 100. FIG. 1 shows only the edge coupler 110 of the optical chip 100. Accordingly, it is possible that the optical chip 100 consists of the edge coupler 110, i.e. that the edge coupler 110 and the optical chip 100 are identical.

The edge coupler 110 of the optical chip 100 includes a first cladding 111, a second cladding 112, a waveguide 113, and a substance 114 surrounding the first and second claddings 111 and 112.

In particular, as can be seen in FIG. 1(a), the second cladding 112 is provided on top of the first cladding 111. To this end, for instance, the first cladding 111 is grown or disposed in a first step, for example on a substrate of the optical chip 100, and the second cladding 112 is grown or disposed on an upper surface of the first cladding 111 in a second step. The growth or fabrication direction of such an optical chip 100 is thereby along the vertical direction of FIG. 1, i.e. from bottom to top. The first cladding 111 and/or the second cladding 112 may be a silicon oxide.

As can be further seen in FIG. 1(a), the waveguide 113 is embedded in the first cladding 111. This may be done in any conventional manner, for example, by interrupting the growth of the first cladding 111 to provide the waveguide 113 before continuing the growth of the first cladding 111, by providing the waveguide 113 and surrounding it with the material of the first cladding 111, or by implanting the waveguide 113 into the first cladding 111 after it has been grown. The waveguide 113 may be made of silicon nitride.

FIG. 1(a) shows that the embedded waveguide 113 is tapered towards an optical facet 115 of the edge coupler 110. The optical facet 115 serves as an optical input and/or output to/from the edge coupler 110 and optical chip 100, respectively. Via the optical facet 115 of the edge coupler 110, the optical chip 100 can be coupled with another optical device. For instance, with an optical fiber or via an optical fiber with another optical chip 100.

In the optical chip 100 shown in FIG. 1, the second cladding 112 has a higher refractive index than the first cladding 111. That is, the first cladding 111 is made from a first material, which has a lower refractive index than a second material of the second cladding 112. The second cladding 112 may have only a slightly higher refractive index than the first cladding 111. The refractive index of the first cladding 111 may be between 98.0-99.7%, for instance around 99.3%, of the refractive index of the second cladding 112.

The surrounding substance 114 has a lower refractive index than the first and second claddings 111 and 112, respectively. The substance 114 may be air, or it may be an epoxy or a glue. The refractive index of the substance 114 surrounding the first and second claddings 111 and 112 may be between 96.5-99.0%, for instance around 98.3%, of the refractive index of the second cladding 112. FIG. 1(a) shows that the substance 114 surrounding the claddings 111 and 112 covers the top of the second cladding 112 and the sides of both claddings 111 and 112. The same can be derived from FIG. 1(b), which illustrates that the substance 114 covers the complete surface of the cladding stack comprising the second cladding 112 provided on the first cladding 111 (the substance 114 being indicated by the dots over the claddings 111/112), and also covers the sides of the cladding stack along the whole tapering length of the waveguide 113.

FIG. 2 shows an optical chip 100 according to an embodiment of the invention in a side view, which builds on the optical chip 100 shown in FIG. 1. That is, same elements of the optical chips 100 are labelled with the same reference signs and function likewise. Accordingly, also the optical chip 100 of FIG. 2 includes an edge coupler 110 comprising the first cladding 111, the waveguide 113 embedded into the first cladding 111, the second cladding 112 provided on the first cladding 111, and the substance 114 surrounding the two claddings 111 and 112, respectively.

FIG. 2 shows further that the edge coupler of the optical chip 100 may be provided on a substrate 200 of the optical chip 100. That is, the first cladding 111 may be provided on the substrate 200, and the second cladding 112 on the first cladding 111. The substance 114 then surrounds the two claddings 111 and 112, and thereby covers also at least partially a surface of the substrate 200 adjacent to the cladding stack, for instance the substance 114 covers a surface area, for example the area of a face of the substrate 200 around the cladding stack, on which the cladding stack is arranged. In other words, the substance 114 surrounding the first and second claddings 111/112 also covers a substrate surface adjacent to the edge coupler 110, or on which the edge coupler 110 is arranged.

It can also be seen in FIG. 2 that the substrate 200 has a width wₛ that is larger than a width w_{c} of the first and second claddings 111 and 112 in a direction perpendicular to the waveguide 113. Notably, in FIG. 2 the waveguide 113 extends into the page. In a possible implementation, both claddings 111 and 112 have the same width. As illustrated further below with respect to FIG. 5, the substrate 200 may extend also beyond the optical facet of the edge coupler 110, i.e. extends beyond the tip of the waveguide 113 and also beyond the cladding stack embedding the waveguide 113. To this end, along the edge coupler 110 the cladding materials may be etched down to the substrate 200 at both sides of the edge coupler 110 and at the optical facet 115. The waveguide 113 may have a width w_{w} of 5-25 µm, or 5-15 µm, for instance around 10 um.

As a consequence of the larger width of the substrate 200 compared to the claddings 111, 112, the substance 114 covers the free surface of the substrate 200, the sides of the claddings 111 and 112, and also the free surface of the second cladding 112 on top of the cladding stack.

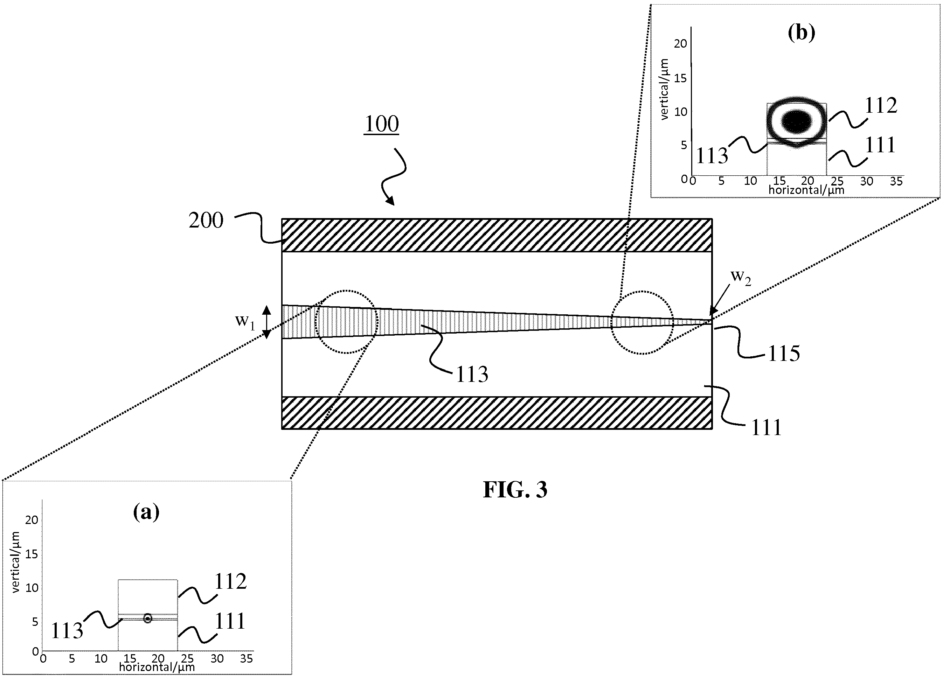

FIG. 3 shows an optical chip 100 according to an embodiment of the invention in a top view, which builds on the optical chips 100 shown in FIG. 2. Again, same elements of the optical chips 100 are labelled with the same reference signs and function likewise. Accordingly, also the optical chip 100 of FIG. 3 includes an edge coupler 110 comprising the first cladding 111 on the substrate 200, the waveguide 113 embedded into the first cladding 111, the second cladding 112 on the first cladding 111, and the substance 114 (not shown for better visibility, i.e. here e.g. being air) surrounding the two claddings 111 and 112, respectively.

FIG. 3 shows particularly how the tapering of the waveguide 113 transfers the optical mode from the waveguide 113 (the simulated intensity of the optical mode is shown in FIG. 3(a)) to the second cladding 112 (the simulated intensity of the optical mode is shown in FIG. 3(b)). To this end, the waveguide 1003 may be tapered from a width w₁ of 600-1000 nm, for instance 700 nm, to a width w₂ of 50-150 nm, for instance 100 nm, over a length of 300-1000 µm, or in a possible implementation 700-800 µm. Where the waveguide 113 is wider, the optical mode of the light is fully or predominantly confined in the waveguide 113, and where the waveguide 113 is narrower, the enlarged optical mode of the light is fully or predominantly confined in the second cladding 112.

In other words, at the beginning of the edge coupler 110 (to the inside the optical chip 100) the optical mode is confined in the waveguide 113 (for instance, in a silicon nitride waveguide 113 sandwiched between two silicon oxide claddings 111 and 112), and at the outward end of the edge coupler 110 (i.e. at the optical facet 115) the optical mode is confined in the second cladding 112 (for instance, in a silicon oxide cladding 112 sandwiched between the bottom silicon oxide cladding 111 and the surrounding epoxy 114). This is achieved by the second (top) cladding 112 having a higher refractive index than the first (bottom) cladding 111, and a higher refractive index than the epoxy or glue. In a possible implementation, for a wavelength of 1.55 µm, the first cladding 111 may have a refractive index of 1.445, the second cladding a refractive index of 1.455, for instance, and an adhesive epoxy or glue with a refractive index of 1.43 is dispensed on top of the cladding stack and on its neighboring part.

FIG. 4 shows a possible material stack included in an optical chip 100 according to an embodiment. The material stack particularly forms the edge coupler 110 of the optical chip 100 shown in FIG. 3. A silicon nitride waveguide 113 is patterned on a layer of exemplarily 230 nm thickness. The waveguide 113 is embedded into an exemplarily ca. 5 µm thick (h1) first cladding 111 provided - optionally over a thermal silicon oxide 400 - on a silicon substrate 200. Below the waveguide 113 are for example 4.5um of silicon oxide (for instance 1 µm thermal oxide 400 and ca. 4.27 µm of e.g. HDP oxide as first cladding material), wherein, for example for a wavelength of 1.55 µm, the first cladding 111 has a refractive index of 1.445. Above the waveguide are exemplarily ca. 500 nm (d) of e.g. the HDP oxide as first cladding material, and thereupon 5 µm (h2) of e.g. a CVD oxide as the second cladding 112. The second cladding 112 has a slightly higher refractive index, for instance of 1.455 compared to the first cladding 111 as described with reference to figure 3. Clearly, the values of the refractive indexes may be different for a different wavelength. The ratio between refractive indexes of the first and second claddings will be approximately the same as described with reference to figure 1.

FIG. 5 shows an optical chip 100 according to an embodiment of the invention, which builds on the optical chips 100 shown in FIG. 2 and FIG. 3. Again, same elements of the optical chips 100 are labelled with the same reference signs and function likewise. The optical chip of FIG. 5 is or includes a photonic chip 500 that includes at one end (righthand side in FIG. 5) one or multiple edge couplers 110, in order to allow an efficient coupling of light from the optical chip 100 to exemplarily a single mode fiber 501 and/or vice versa. The optical fiber 501 may or may not be embedded into a fiber array unit, and may or may not be aligned to the photonic chip 500 using V-grooves patterned on the optical chip 100 itself. The fiber 501 or fiber array unit is actively aligned in front of the optical facet 115 of the edge coupler 110.

The edge coupler 110 again embeds the waveguide 113 in the first cladding 111 on the substrate 200. The second cladding 112 is on the first cladding 111. On both sides of the waveguide 113 and in front of the optical fiber 501, the claddings 111 and 112 are etched for a certain depth. The waveguide 113 allows a mode conversion, which is obtained by its tapering, for example an adiabatic tapering or by using other well-known approaches (sub-wavelength tapering, multi waveguide tapering as trident, directional coupler, etc...). The cladding stack containing the claddings 111 and 112 may be fully etched to reach the substrate 200.

The substance 114 being epoxy or glue may be dispensed and cured on top of the edge coupler 110, on parts of the substrate 200, and on the neighboring part of the optical fiber 501. The optical fiber 501 or the fiber array unit may be thereby optically coupled to and attached to the edge coupler 110 by the epoxy or glue. The epoxy and glue has multiples functions. That is, it acts as a cladding for second cladding 112 when functioning as the edge coupler output waveguide, it helps minimizing reflections between the optical chip 100 and the fiber 501, and it bonds together the fiber 501 and the optical chip 100.

FIG. 6 illustrates a fabrication method 600 of an optical chip 100 according to an embodiment of the invention. The optical chip 100 includes an edge coupler 110 for coupling light between the chip 100 and another optical device, and may be the optical chip 100 shown in FIG.1, 2, 3 or 5.

The method 600 comprises a first step 601 of providing a first cladding layer. Further, a second step 602 of embedding a waveguide 113 into the first cladding layer, the waveguide 113 being tapered towards an optical facet 115 of the edge coupler 110. The method 600 then includes a step 603 of providing a second cladding layer on the first cladding layer, the second cladding layer having a higher refractive index than the first cladding layer. Further, a step 604 of forming a first cladding 111 and a second cladding 112 by removing parts of the first and second cladding layers, respectively, wherein parts adjacent to the waveguide 113 are removed so that the waveguide remains embedded in the first cladding 111. Finally, it includes a step 605 of surrounding the first cladding 111 and the second cladding 112 by a substance 114 having a lower refractive index than the first and second claddings 111 and 112.

Accordingly, the embodiments of the invention provides a cheap wafer level fabrication method and a waveguide design to allow for high volume low cost standard single mode fiber attachment to an optical chip 100.

In particular, for implementing the above-described embodiments of the invention, standard CMOS processing may be used. Thereby, no complex processing is needed for the fabrication of the optical chip 100. Further, as the processing is standard, there is no concern related to the reliability of such a structure. Moreover, with the optical chip 100, a chip coupling loss below 1dB can be achieved directly to a 10 µm MFD single mode fiber, both for TE and TM modes.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Optical chip (100) including an edge coupler (110) for coupling light between the chip (100) and another optical device, the edge coupler (110) comprising
a first cladding (111),
a second cladding (112) provided on the first cladding (111) and having a higher refractive index than the first cladding (111),
wherein the first cladding (111) and the second cladding (112) are surrounded by a substance (114) having a lower refractive index than the first and second claddings (111, 112), and
a waveguide (113) embedded in the first cladding (111), the waveguide (113) being tapered towards an optical facet (115) of the edge coupler (110).

2. Optical chip (100) according to claim 1, wherein
the substance (114) surrounding the first and second claddings (111, 112) is air.

3. Optical chip (100) according to claim 1, wherein
the substance (114) surrounding the first and second claddings (111, 112) is an epoxy or a glue.

4. Optical chip (100) according to claim 3, further comprising
an optical fiber (501) or fiber array unit optically coupled to and attached to the edge coupler (110) by the epoxy or glue.

5. Optical chip (100) according to claim 1, 3 or 4, wherein
the refractive index of the substance (114) surrounding the first and second claddings (111, 112) is between 96.5-99.0% of the refractive index of the second cladding (112).

6. Optical chip (100) according to one of the claims 1 to 5, wherein
the refractive index of the first cladding (111) is between 98.0-99.7% of the refractive index of the second cladding (112).

7. Optical chip (100) according to one of the claims 1 to 6, further comprising a substrate (200), on which the edge coupler (110) is provided,
wherein the substrate (200) has a larger width than the first and second claddings (111, 112) in a direction perpendicular to the waveguide (113) and extends beyond the optical facet (115) of the edge coupler (110).

8. Optical chip (100) according to claim 7, wherein
the substance (114) surrounding the first and second claddings (111, 112) also covers a substrate surface adjacent to the edge coupler (110).

9. Optical chip (100) according to one of the claims 1 to 8, wherein
the first and second claddings (111, 112) have each a width of between 5-20 µm.

10. Optical chip (100) according to one of the claims 1 to 9, wherein
the waveguide (113) is tapered from a width of 600-1000 nm to a width of 50-150 nm over a length of 300-1000 µm.

11. Optical chip (100) according to one of the claims 1 to 10, wherein
the waveguide (113) is embedded in the first cladding (111) 0.3-0.7 µm below the second cladding (112).

12. Optical chip (100) according to one of the claims 1 to 11, wherein
a thickness of the first cladding (111) is between 2-6 µm, and/or
a thickness of the second cladding (112) is between 4-6 µm, and/or
a thickness of the waveguide (113) is between 150-300 nm.

13. Optical chip (100) according to one of the claims 1 to 12, wherein
the first cladding (111) and/or the second cladding (112) is a silicon oxide.

14. Optical chip (100) according to one of the claims 1 to 13, wherein
the waveguide (113) is made of silicon nitride.

15. Method (600) of fabricating an optical chip (100) including an edge coupler (110) for coupling light between the chip (100) and another optical device, the method (600) comprising
providing (601) a first cladding layer,
embedding (602) a waveguide (113) into the first cladding layer, the waveguide (113) being tapered towards an optical facet (115) of the edge coupler (110),
providing (603) a second cladding layer on the first cladding layer, the second cladding layer having a higher refractive index than the first cladding layer,
forming (604) a first cladding (111) and a second cladding (112) by removing parts of the first and second cladding layers, respectively, wherein parts adjacent to the waveguide (113) are removed so that the waveguide (113) remains embedded in the first cladding (111),
surrounding the first cladding (111) and the second cladding (112) by a substance (114) having a lower refractive index than the first and second claddings (111, 112).
